Europäisches Patentamt

(19) European Patent Office

Office européen des brevets

(11) Publication number: **0 108 685**
**A2**

# (12) EUROPEAN PATENT APPLICATION

(21) Application number: **83402108.1**

(22) Date of filing: **27.10.83**

(51) Int. Cl.³: **C 01 B 25/41**
**C 01 B 25/45**

(30) Priority: **04.11.82 US 439156**

(43) Date of publication of application:
**16.05.84 Bulletin 84/20**

(84) Designated Contracting States:
**DE FR**

(71) Applicant: **CALGON CORPORATION**
**Route 60-Campbell's Run Road**
**Robinson Township Pennsylvania 15205(US)**

(72) Inventor: **Ralston, Paul H.**
**29 Santa Fe Drive**
**Bethel Park Pennsylvania 15102(US)**

(72) Inventor: **Whitney, Sandra L.**
**Ivy & Gay**
**North Fayettte Township Pennsylvania(US)**

(74) Representative:. **Ahner, Francis et al,**
**CABINET REGIMBEAU 26, avenue Kléber**
**F-75116 Paris(FR)**

(54) **A glassy crystalline phosphate product and a process for the production thereof.**

(57) The instant invention is directed to a glassy crystalline phosphate product, comprising at least one alkali metal oxide and phosphorus pentoxide having a molar ratio of greater than about 1.5:1 to less than 2.0:1.

The instant invention is also directed to a process for the production of a glassy crystalline phosphate product comprising at least one alkali metal oxide and phosphorus pentoxide having a molar ratio of greater than about 1.5:1 to less than 2.0:1, comprising the steps of:

(a) heating a mixture of at least one alkali metal salt and a source of phosphorus pentoxide until said mixture melts; and

(b) quenching said melted mixture.

EP 0 108 685 A2

Croydon Printing Company Ltd

C-1347

"A GLASSY CRYSTALLINE PHOSPHATE PRODUCT
AND A PROCESS FOR THE PRODUCTION THEREOF".

Background of the Invention

Polyphosphate glass is used in scale and corrosion inhibiting compositions for the treatment of a variety of aqueous systems (U.S. Patents 3,284,368 and 4,326,873). Polyphosphate glass is generally produced by means of an aqueous or hydrocarbon slurry of phosphoric acid, and soda ash or di- or tri-valent metal oxides or salts, such as calcium oxide or aluminum oxide, which is fed to a high temperature furnace. Water or hydrocarbon, carbon dioxide and volatile gases are liberated and the anhydrous components are fused and released to a cooling source where a quenching operation yields a solid glass.

The product of the instant invention is a glassy crystalline phosphate product. The product is substantially a crystalline product in a glass matrix.

This glassy crystalline product yields a composition containing both crystalline polyphosphates (alkali metal pyrophosphates and alkali metal tripolyphosphates) and glassy polyphosphates. This combination of polyphosphate species in one product insures that segregation during shipment will not occur. Segregation is a problem with physical mixtures containing different particle sizes of the individual crystalline and glassy polyphosphate species during shipment. Moreover, the glassy crystalline product exhibits improved solubility characteristics as compared to the individual crystalline polyphosphates.

## Description of the Invention

The instant invention is directed to a glassy crystalline phosphate product, comprising at least one alkali metal oxide and phosphorus pentoxide having a molar ratio of greater than about 1.5:1 to less than 2.0:1.

The instant invention is also directed to a process for the production of a glassy crystalline phosphate product comprising at least one alkali metal oxide and phosphorus pentoxide having a molar ratio of greater than about 1.5:1 to less than 2.0:1, comprising the steps of:

(a) heating a mixture of at least one alkali metal salt and a source of phosphorus pentoxide until said mixture melts; and

(b) quenching said melted mixture.

Any alkali metal salt may be used. Examples include: an alkali carbonate, alkali bicarbonate, alkali hydroxide, alkali orthophosphate and the like. The preferred alkali metal salts are sodium carbonate, potassium carbonate, disodium orthophosphate and dipotassium orthophosphate.

Any source of phosphorus pentoxide may be used. Examples include: an alkali metal phosphate, o-phosphoric acid and phosphoric pentoxide. The preferred sources of phosphorus pentoxide are orthophosphoric acid, monosodium orthophosphate and monopotassium orthophosphate.

Any alkali metal oxide, or combination, may be present, i.e. $Li_2O$, $Na_2O$, $K_2O$, $Rb_2O$ and $Cs_2O$.

It is critical to the instant invention that the ratio of total alkali metal oxide to phosphorus pentoxide in the product be from about 1.5:1 to 2.0:1. If the ratio of alkali metal oxide to phosphorus pentoxide is greater than 1.5 and less than 2.0, the product will always have both glassy properties and crystalline properties if prepared with fusion and normal quenching. (With drastic precipitous, quenching the lower limit may be greater than 1.5.) If the ratio of alkali metal oxide to phosphorus pentoxide is 1.5 or less, the product will be a glassy phosphate product. If the ratio is 2.0:1 or greater, the product will always be solely a crystalline product. The glassy crystalline phosphate product of the instant invention was found to be an effective corrosion and scale inhibitor.

Water or a hydrocarbon may be used as a carrier to mix the alkali metal salt and phosphorus pentoxide source. The alkali metal salt and phosphorus pentoxide source are mixed together, generally in the presence of a carrier. This well-mixed slurry containing the dispersed solids is then fed to a furnace where the carrier and any volatile gases are released and the anhydrous reactants are fused. The fusion temperature is generally between 800 to 1400°C. The molten charge is then fed to a cooling source where it solidifies as a glassy crystalline composition.

The invention may be illustrated by the following representative examples.

Example 1

Four moles of disodium orthophosphate ($Na_2HPO_4$) and two moles of monosodium orthophosphate ($NaH_2PO_4 \cdot H_2O$) were reacted and yielded five moles of sodium oxide and three moles of phosphorus pentoxide. This mixture was then heated to 900°C. until the components were molten. Then the liquid reaction product was cast on a metal surface. The resulting product was a glassy crystalline phosphate product containing a ratio of alkali metal oxide to phosphorus pentoxide of 1.67:1.

Example 2

3.3 moles of disodium carbonate ($Na_2CO_3$), 1.7 moles of dipotassium carbonate ($K_2CO_3$) and 6 moles of orthophosphoric acid ($H_3PO_4$) were reacted and yielded 3.3 moles of sodium oxide

$(Na_2O)$, 1.7 moles of potassium oxide $(K_2O)$ and 3 moles of phosphorus pentoxide $(P_2O_5)$. This mixture was then heated to $1100^{\circ}C$. until the components were molten. Then the liquid reaction product was cast on a metal surface. The resulting product was a glassy crystalline phosphate product containing a ratio of alkali metal oxide to phosphorus pentoxide of 1.67:1.

## Example 3

The scale inhibiting effectiveness of the glassy crystalline phosphate product of Example 1 was measured for calcium carbonate inhibition. An accelerated procedure was used wherein 0.5 mg/l and 0.7 mg/l of the product of Example 1 and three other inhibitors were separately present in supersaturated calcium carbonate solutions. These solutions were prepared by mixing 735 mg/l $HCO_3^-$ and 200 mg/l $Ca^{++}$ in the test solution to give 2.2 times the normal saturation of calcium carbonate at pH 8. The temperature of the solution was held at $150^{\circ}F$. for a period of 24 hours. At the end of 24 hours, the solution was filtered through No. 42 filter paper and analyzed for total calcium concentration by the Schwarzenbach Titration Method (EDTA, chrome black T). Based on the calcium titration value with no inhibitor present (0% inhibition) and the titration value with no precipitation (100% inhibition), the performance of the inhibitor as a threshold inhibitor for calcium carbonate was measured. The results are summarized in Table I.

## TABLE I

| Inhibitor | Concentration (mg/l) | Percent Inhibition | Concentration (mg/l) | Percent Inhibition |
|---|---|---|---|---|
| $5Na_2O:3P_2O_5$ (Example 1 Product) | 0.5 | 86 | 0.7 | 98 |
| $Na_4P_2O_7$ | 0.5 | 87 | 0.7 | 94 |
| $Na_5P_3O_{10}$ | 0.5 | 81 | 0.7 | 92 |
| $1.1Na_2O:1P_2O_5$ | 0.5 | 82 | 0.7 | -- |

## Example 4

The corrosion inhibiting effectiveness of the glassy crystalline phosphate product of Example 1 and three other inhibitors was measured for steel. An accelerated procedure was used wherein 88 mg/l of $Ca^{++}$, 24 mg/l $Mg^{++}$, 72 mg/l $Cl^-$, 328 mg/l $SO_4^=$ and 40 mg/l $HCO_3^-$ were mixed in 1000 ml of water. The steel panels (1"x2") were continuously immersed in the solutions while the solutions were mildly agitated. The tests ran for 48 hours at room temperature and at a pH of 6.8 to 7.1. The test solutions were renewed after the first 24 hours. The steel panels were weighed at the beginning of the test and then reweighed, after cleaning with inhibited acid, at the end of the test. The steel weight losses were calculated as mils per year (mpy) corrosion rate and are summarized in TABLE II.

## TABLE II

| Inhibitor | Concentration (mg/l) | Corrosion Rate (mpy) | Percent Inhibition |
|---|---|---|---|
| 5 $Na_2O:3P_2O_5$ (Example 1 Product) | 20 | 1.7 | 94.8 |
| $Na_4P_2O_7$ | 20 | 0.9 | 97.3 |
| $Na_5P_3O_{10}$ | 20 | 4.3 | 86.9 |
| 1:1 $Na_2O:1\ P_2O_5$ | 20 | 0.8 | 97.0 |

WHAT IS CLAIMED IS:

1. A glassy crystalline phosphate product, comprising at least one alkali metal oxide and phosphorus pentoxide having a molar ratio of greater than about 1.5:1 to less than 2.0:1.

2. A process for the production of a glassy crystalline phosphate product comprising at least one alkali metal oxide and phosphorus pentoxide having a molar ratio of greater than about 1.5:1 to less than 2.0:1, comprising the steps of:

. (a) heating a mixture of at least one alkali metal salt and a source of phosphorus pentoxide until said mixture melts; and

(b) quenching said melted mixture.

3. The process of Claim 2, wherein said alkali metal salt is selected from the group consisting of an alkali carbonate, alkali bicarbonate, alkali hydroxide, alkali metal phosphate and mixtures thereof, and said source of phosphorus pentoxide is selected from the group consisting of an alkali metal phosphate, orthophosphoric acid and phosphoric pentoxide.

4. The process of Claim 2, wherein said alkali metal salt is selected from the group consisting of sodium carbonate, potassium carbonate and mixtures thereof, and said source of phosphorus pentoxide is orthophosphoric acid.

5. The process of Claim 2, wherein said alkali metal salt is disodium or dipotassium orthophosphate and said source of phosphorus pentoxide is monosodium or monopotassium orthophosphate.

6. The process of Claim 2, wherein said mixture is heated to a temperature of 800 to $1400^{o}$C.